# EUROPEAN PATENT SPECIFICATION

(11) **EP 3 708 294 B1**
(45) Date of publication and mention of the grant of the patent: **28.09.2022**
(21) Application number: 20162544.9
(22) Date of filing: 11.03.2020
(51) Int. Cl.: B23Q 1/00, B23Q 3/10, B23Q 3/06

(54) **MODULAR DEVICE FOR CLAMPING AND/OR SUPPORTING A PIECE TO BE WORKED**
MODULARE VORRICHTUNG ZUM EINSPANNEN UND/ODER ABSTÜTZEN EINES ZU BEARBEITENDEN TEILS
DISPOSITIF MODULAIRE POUR SERRER ET/OU SUPPORTER UNE PIÈCE À USINER

(30) Priority: 13.03.2019 IT 201900003675
(43) Date of publication of application: 16.09.2020
(73) Proprietor: Rem Industrie S.R.L., 35123 Padova (IT)
(72) Inventor: PICCOLO, Sebastiano, 35012 Camposampiero (PD) (IT)
(74) Representative: Maroscia, Antonio

(56) References cited:
- DE-A1-102014 001 963
- DE-A1-102014 112 843
- US-A1- 2012 169 002
- US-B2- 9 308 610

## Description

### Technical Field

The present invention generally finds application in the field of workpiece locking devices and particularly relates to a modular device for clamping and/or supporting a workpiece on a base plate of a machine tool.

### State of the art

The use of modular devices for clamping and/or supporting workpieces to be processed by a machine tool has been long known.

The need to position and reposition the workpiece on the base plate with high accuracy to avoid errors during mechanical processing and ensure repeatability of the various machining operations on the workpiece, is also known.

Generally, the workpiece is positioned on the base plate by means of at least one main body having a longitudinal axis which is secured at one end to the workpiece and at the opposite end to the base plate using respective tie-rod fixing means.

The device further comprises locking members radially and slidingly accommodated in respective seats of the main body and formed with such a shape as to lock the fixing means by acting on the heads of the appropriately shaped heads of the tie-rods.

Generally, the locking members comprise jaws that are designed to interact with the fixing means by means of appropriate screws which are rather difficult and bothersome to tighten, thereby increasing the workpiece set-up time.

Moreover, the placement of these devices requires the use of skilled labor to perform the delicate preliminary operations for positioning and centering the device on the plate and the workpiece on the device.

Another serious drawback is that the radial thrust on the locking members against the heads of the tie rods requires the use of transverse screws and tie rods, adapted to be engaged in the base plate and in the workpiece, which have a special shape and are not commercially available.

In an attempt to at least partially obviate these drawbacks, locking devices have been developed which are designed to lock/unlock the device more quickly and effectively, thereby reducing the workpiece set-up time and hence processing costs.

DE102014001963 discloses a locking device comprising a main body with an axial cavity and an end portion rigidly joined to fixing means connected to a supporting base plate.

Furthermore, the device comprises a pin inserted in the cavity, which has an end portion rigidly joined to fixing means connected to the workpiece and a plurality of generally spherical locking members inserted in corresponding seats formed in the main body.

A ring nut is provided outside the locking device, coaxial with the main body and having a conical inner surface adapted to interact with the locking members in the radial direction to lock/unlock the pin secured to the workpiece.

A simple rotation of the ring nut moves the locking members that act upon the pin, thereby reducing the locking times and affording substantially stable clamping of the workpiece.

One drawback of this arrangement is that the pin is rigidly joined to a non-commercial threaded fixing member and the main body has a special shape and fixing means for fixation to the base plate that are also not commercially available.

Furthermore, since the locking means are metal balls that act upon an annular groove of the pin having a half-circular section, a substantially linear or even point-like contact and locking zone is obtained.

The reduced contact area considerably increases the local pressure, with the risk of leaving cuts or marks in the pin, and hence reduce the stability and repeatability of the positioning operation, and of requiring a high clamping force, with the same locking effect.

A further drawback of this solution is that the ring nut does not have any guard member for protecting the areas of the device in contact with the plate from undesired materials or for opposing the rotation of the ring nut from the active locked position as a result of workpiece machining vibrations.

### Technical Problem

In view of the prior art, the technical problem addressed by the present invention is, in short, to increase locking effectiveness using commonly available commercial members.

### Disclosure of the invention

The object of the present invention is to overcome the above drawback, by providing a modular device for clamping and/or supporting a workpiece on a base plate of a machine tool that is highly efficient and relatively cost-effective.

A particular object of the present invention is to provide a modular device for clamping and/or supporting a workpiece as described above that can exert a high clamping force and provide accurate workpiece positioning.

A further object of the present invention is to provide a modular device for clamping and/or supporting a workpiece as described above that can prevent the workpiece from being undesirably released from the operative locked allows position due to workpiece machining vibrations.

Another object of the present invention is to provide a modular device for clamping and/or supporting a workpiece as described above that is versatile and can be used for clamping pieces of different weights and sizes.

A further object the present invention is to provide a modular device for clamping and/or supporting a workpiece as described above that can operate with commercial, commonly available fixing means.

Another object of the present invention is to provide a modular device for clamping and/or supporting a workpiece as described above, that requires no particular operator skills during locking/unlocking.

Yet another object of the present invention is to provide a modular device for clamping and/or supporting a workpiece as described above that has small dimensions.

These and other objects, as more clearly explained hereinafter, are fulfilled by a modular device for clamping and/or supporting a workpiece on a base plate of a machine tool as defined in claim 1, which comprises a main body with a central cavity defining a longitudinal axis and having a first and a second longitudinal end portions, with the second end portion having an external thread.

The device further comprises first fixing means having a pin adapted to be introduced into the first end portion of the body and to be secured to the workpiece; a ring nut mounted outside the main body and screwed onto the external thread of the second end portion and a plurality of locking members adapted to be introduced into corresponding angularly offset seats of the tubular body, each having an outer end adapted to cooperate with the inner surface of the ring nut to exert a radial thrust on the same members. In addition, the pin comprises an annular recess, proximate to one of its longitudinal ends, which is designed to cooperate with the locking members.

According to a particular aspect of the invention, the device comprises second fixing means which are adapted to be introduced into the second end portion and to be secured to the base plate, the annular recess having a first substantially conical contact surface, and the locking members have an inner end with a first portion having a substantially concave shape complementary to that of the first conical contact surface to exert a substantially uniform clamping force thereon, with an axial component.

Conveniently, the locking members are substantially prismatic jaws, which are slidingly introduced with a precision running fit into complementarily shaped seats defining substantially radial sliding guides.

Due to this combination of features, the contact surface between the pin and the locking members is not a linear or point-like contact, but extends on a wider area, which considerably reduces the local locking pressure. Moreover, this greater contact surface increases the locking action on the pin and reduces the likelihood of forming impressions thereon which might affect workpiece repositioning accuracy.

Conveniently, the first and second fixing means comprise respectively first and second screw interface members of the commercial type. Thus, in case of replacement of these interface members due to wear or damage, no laborious machining of special pieces will be required, and widely available commercial replacement members may be used.

Advantageous embodiments of the invention are obtained in accordance with the dependent claims.

### Brief description of the drawings

Further characteristics and advantages of the invention will be more apparent from the detailed description of a preferred, non-exclusive embodiment of a modular device for clamping and/or supporting a workpiece on a base plate of a machine tool, which is described as a non-limiting example with the help of the annexed drawings, in which:
FIG. 1 is a perspective view of a modular clamping device of the invention, which is secured to a base plate and in a workpiece support arrangement;
FIG. 2 is a cross sectional view of the clamping device of FIG. 1;
FIG. 3 is an exploded perspective view of the modular clamping device of FIG. 1;
FIGS. 4A, 4B, 4C are sectional views of the clamping module of FIG. 1 in successive operating steps;
Fig. 5A is a side view of a first part of the device of FIG. 1;
FIG. 5B is a sectional view of the detail of FIG. 5A;
FIG. 6A is a side view of a second part of the device of FIG. 1;
FIG. 6B is a sectional view of the detail of FIG. 6A;
Fig. 7A is a side view of a third part of the device of FIG. 1;
FIG. 7B is a sectional view of the detail of FIG. 7A;
FIGS. 8A-8F are a side view, a front view, a top view, a broken away side view, a perspective top view and a bottom perspective view of a locking member of the device of Fig. 1.

### Detailed description of a preferred exemplary embodiment

Particularly referring to the figures, there is shown a modular device, generally designated by numeral 1, for clamping and/or supporting a workpiece P on a base plate B of a machine tool.

As a non-limiting example, the device 1 may be used for clamping, supporting or locking blanks or workpieces P to be processed by a machine tool, not shown, preferably of the type intended for chip removal machining, i.e. grinding or polishing, or alternatively any other processing of a workpiece P, which requires the latter to be in a raised position on a table or a support surface.

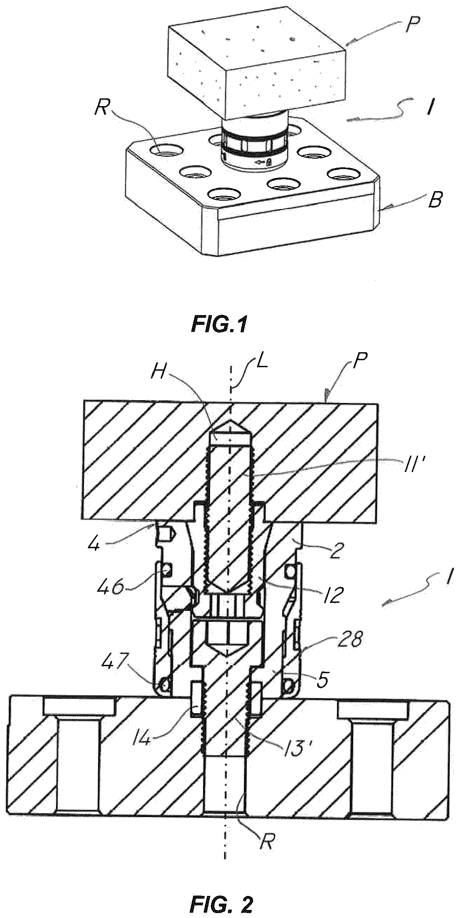

In a preferred configuration of the invention, as shown in FIG. 1, the device 1 comprises a main body 2 with a central cavity 3 defining a longitudinal axis L and having first 4 and second 5 longitudinal end portions.

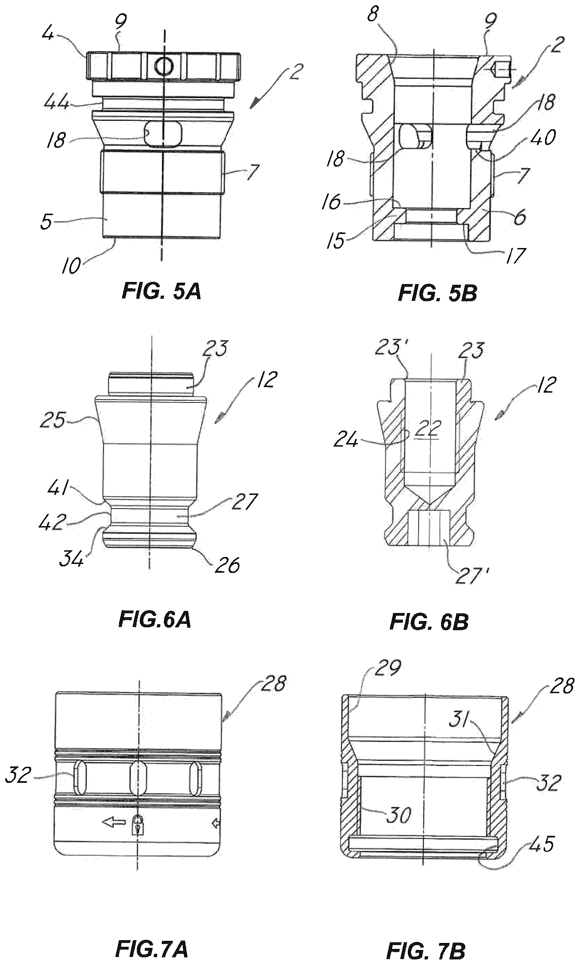

As best shown in FIGS. 5A and 5B, the main body 2 is substantially tubular and comprises a substantially cylindrical wall 6 designed to define the central cavity 3, which also has a substantially cylindrical shape.

The main body 2 has an external thread 7 on its second longitudinal end portion 5 and its central cavity 3 has a conical flared end portion 8.

The first 4 and second 5 longitudinal end portions of the main body 2 have respective flat end surfaces 9, 10 substantially perpendicular to the longitudinal axis L and intended to contact the workpiece P and the base plate B respectively.

First fixing means 11 are also provided, which comprise a pin 12 adapted to be introduced into the first end portion 4 of the body 2 and to be secured to the workpiece P and second fixing means 13 adapted to be introduced into the second end portion 5 and to be secured to the base plate B.

Advantageously, the first 11 and second 13 fixing means comprise respectively first 11' and second 13' screw interface members of commercial type which can be screwed into respective complementarily threaded holes H, R formed respectively on the workpiece P and the base plate B respectively.

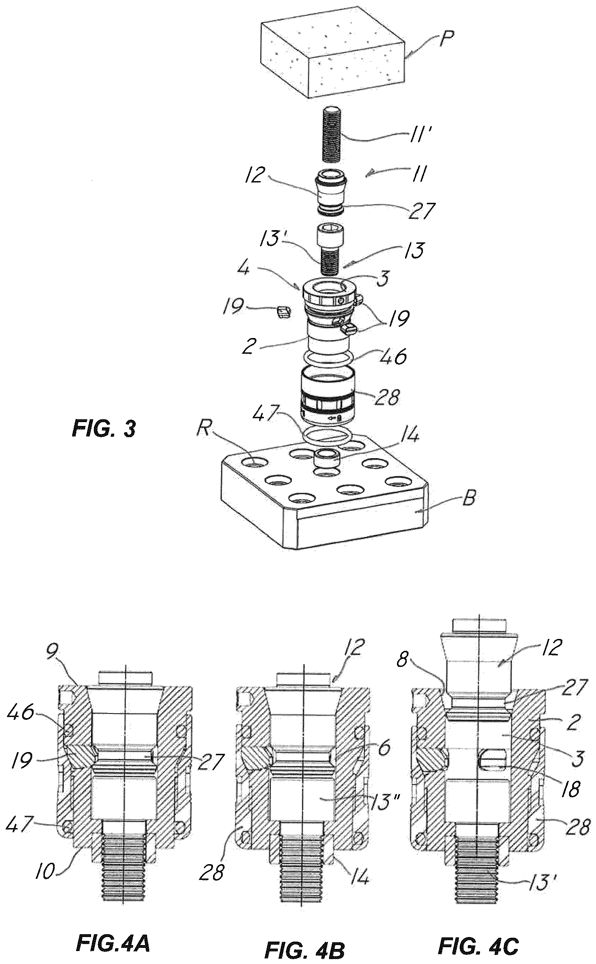

Conveniently, as best shown in FIGS. 1 and 3, the base plate B may have a plurality of equally spaced holes R for securing a plurality of modular devices 1 and supporting workpieces P of different sizes or heavier weight.

It will be appreciated that the use of commercially, promptly available first and second screw interface members 11', 13', can considerably reduce the manufacturing costs for the modular device 1 and hence holes H and R having standard sizes and mating threads may be formed.

By way of example, the first and second screw interface members 11', 13' may be sections of threaded bars or enlarged head screws with standard M12 or M16 threads.

As is known per se, the device 1 may comprise a centering bush 14 arranged below the main body 2 at the second longitudinal end portion 5 and adapted to assist positioning of the main body 2 relative to the plate B.

For this purpose, the second longitudinal end portion 5 may have an inner annular collar 15 at its central cavity 3, whose flat annular surface 16 defines a first abutment surface for the cylindrical head 13" of the second interface members 13' and a second abutment surface 17 for the centering bush 14, as best shown in FIGS. 2, 4A, 4B, 4C.

At least two angularly offset seats 18 are formed in an intermediate portion of the main body 2, along an annular peripheral region, and slidingly receive corresponding locking members 19, sliding in a radial direction to lock the pin 12 in a given axial position.

In the illustrated example, the locking members 19 have an approximately elongate shape with an outer end 20 and an inner end 21, as described in greater detail below. Furthermore, three seats 18 are provided, arranged at 120° from each other, for axially balanced locking of the pin 12.

Preferably, as shown in FIG. 6B, the pin 12 is hollow and has an axial blind hole 22 which extends from the end 23 for most of its length and is internally threaded with a thread 24 that corresponds to that of the interface member 11' for the latter to be screwed therein. An annular projection 23' is provided at the end 23, for engaging a complementarily shaped recess formed at each hole H formed in the workpiece. Alternatively, the axial hole 22 may be formed as a through hole, to allow the pin 12 to be fixed to the workpiece P using an enlarged head screw, not shown.

The pin 12 has a ground conical portion 25 whose taper corresponds to that of the conical flared surface 8 of the axial cavity 3 of the main body 2 to create a friction contact therewith, and thus enhance the locking effect.

At the opposite end 26, the pin 12 has an annular recess 27 and a hexagonal undercut 27' on its outer surface, allowing it to be tightened on the main body 2 using a wrench.

In order to promote the radial movement of the locking members 19, the modular device 1 further comprises a substantially cylindrical ring nut 28 whose minimum inside diameter is greater than the outside diameter of the second longitudinal portion 5 of the main body 2.

The inner surface of the ring nut 28 has a substantially cylindrical lead-in portion 29 and an opposite threaded end portion 30, preferably with a left-handed thread 30, for the external thread 7 of the second longitudinal end portion 5 to be screwed thereon.

In addition, a substantially conical flared annular zone 31 may be provided between the two cylindrical end zones and is designed to interact with each of the locking members 19 at a convex contact zone 33 of the outer end 20.

Thus, as the ring nut 28 is screwed onto the main body 2, the flared surface 31 will act on the convex contact area 33 of each locking member 19 to push it radially toward the pin 12.

In the illustrated embodiment, suitable slots 32 are formed on the outer surface of the ring nut 28 for receiving a wrench required to close the ring nut 28 on the main body 2.

According to the invention, the annular recess 27 has a first substantially conical contact surface 34 and the locking members 19 have a substantially concave and conical first portion 35 at the inner end 21, which is complementary to that of the first conical contact surface 34 to exert an inward radial force with an axial component thereon.

In other words, as a result of the ring nut being screwed on the main body, each of the locking members, the first contact surface 34 of the annular recess 27 and the first portion 35 of the locking member 19 are formed to generate a substantially uniform clamping force on the pin 12.

Due to the inclination of the contact surfaces 34, 35, the locking members will exert a force on the pin 12 with an axial component directed toward the second longitudinal end portion 5 of the body 2. Furthermore, the contact surfaces 34, 35 will provide a substantially even distribution of the locking force, thereby ensuring a high stability of the locking effect with a lower risk of local deformation of contacting members.

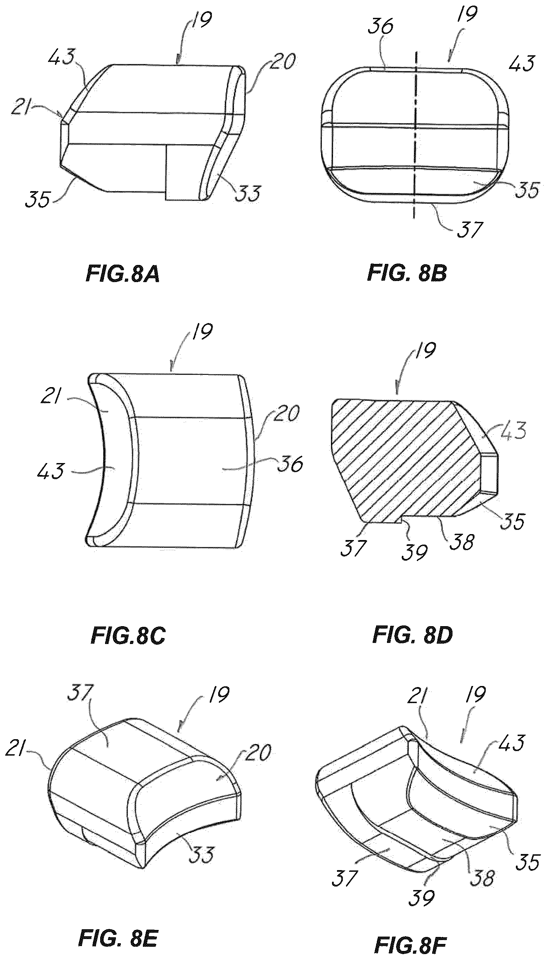

In the embodiment as shown in FIGS. 8A-8F, the locking members 19 are substantially prismatic jaws, which are slidingly introduced with a precision running fit into complementarily shaped seats 18 defining substantially radial sliding guides.

Conveniently, each of the jaws 19 has an undercut 38 at one of its flat faces 36, 37, defining a tooth 39 which is adapted to interact with a corresponding raised portion 40 in a facing surface of each seat 18 to prevent the corresponding locking member 19 from falling into the central cavity 3 of the main body 2.

In the illustrated embodiment, the annular recess 27 of the pin 12 has a second conical contact surface 41 facing and oppositely tapered to the first conical contact surface 34 and joined thereto by a cylindrical annular surface 42.

Advantageously, the inner end 21 of the locking members 19 has a second portion 43 having a substantially conical shape complementary to that of the second conical contact surface 41 of the annular recess 27.

This second portion 43 of the end of each jaw or locking member 19 has the purpose to interact with the second conical surface 41 of the annular recess 27 of the pin 12 to push the latter away from the annular recess 27 if the pin is locked. This greatly simplifies the unlocking operations that were heretofore typically carried out using a spike and a hammer.

It should be noted that the prismatic jaw shape of the locking members 19 and the form of the pin 12 allow exertion of a high clamping force as compared to the force that could be achieved with a known modular device, for example with substantially spherical locking members.

This characteristic helps to increase the contact area between the locking members 19 and the pin 12 and provide more stable and precise repositioning of the workpiece P on the base plate B.

In a further aspect of the invention, annular recesses 44, 45 are provided on the outer surface of the main body 2 and the inner surface of the ring nut 18 respectively, for receiving respective sealing gaskets 46, 47 which are intended to prevent the ingress of foreign matter.

Thus, the gaskets 46, 47 will oppose any undesired mutual loosening of the ring nut 28 and the main body 2, for example due to machining vibrations induced by the machine tool on the workpiece B.

Preferably, the ring nut 28, the main body 2, the locking members 19 and the pin 12 are made of stainless steel or other corrosion-resistant metallic and nonmetallic materials having adequate mechanical strength and possibly undergoing suitable thermal treatments, e.g. under vacuum, to achieve adequate surface hardness.

As a non-limiting example, the final hardness will range from 50HRC to 60HRC, preferably from 54HRC to 56HRC.

The use of the modular device of the invention, referring both to FIG. 3 and to FIGS. 4A, 4B and 4C, is as follows.

An operator will hold a main body 2 with the locking members 19 and an annular gasket 46 previously inserted in its seats 18 and annular recess 44, and will screw a ring nut 28 onto the main body 2 so prepared after placing a gasket 47 into the annular recess 45 of the former, and cause the threads 7 and 30 to interact.

Then, the operator will introduce an interface member 13', e.g. having a into the main-body-ring nut assembly, and will stably tighten it with a suitable tightening force into a predetermined hole R of the base plate B after positioning a centering bush 14 on the edge of the hole.

Now, the operator will form a hole H with an internal thread of predetermined diameter and pitch on a base surface of a workpiece P, with an annular undercut along the edge of the hole to receive and center the annular projection 23' of the pin 12. Then, the operator will stably screw a threaded interface member 11' into the central hole 22 of the pin 12 and will screw the interface member-pin assembly into the threaded hole H formed on the workpiece P.

The pin 12 fixed on the workpiece P by the interface member 11' will be later fitted, as shown in FIG. 4C, with its annular recess 27 facing the locking members 19. As the ring nut 28 is rotated counterclockwise, its flared surface 31 will contact the surface 33 of the outer surface 20 of the jaws 19 and cause them to radially slide along the seats 18 and force them inwards. Thus, the conical portion 35 of the jaws 19 will engage in an even, point-like manner the first conical contact surface 34 of the annular recess 27 of the pin 12 and exert thereupon a locking force directed toward the other interface member 13' and hence toward the base plate, such force being proportional to the torque applied to the ring nut 28 with respect to the main body 2.

The friction between the flat surfaces 9, 10 of the pin and the main body 2, against the workpiece P and the base plate B respectively, in addition to the friction exerted between the conical surfaces 8 and 25 of the main body 2 and the pin 12 respectively, as well as between the gaskets 46, 47 of the main body 2 and the ring nut 28, will ensure maintenance of the clamping force initially exerted and stable clamping during the later machining steps of the machine tool.

At the end of the machining process, in order to separate the workpiece P from the base plate B, the operator will have to carry out steps in the reverse direction, with the additional help of the second portion 43 of the inner end of each jaw 19 that will cooperate with the second conical surface 41 of the annular recess, whose taper is directed opposite to that of the first, thereby exerting on the pin 12 a force directed toward the workpiece P to assist detachment thereof from the main body 2, in view of its separation or repositioning in a later machining step.

It will be appreciated from the foregoing that the modular device of the invention for clamping and/or supporting a workpiece on a base plate for a machine tool fulfills the intended objects and is particularly able to exert a high clamping force and achieve accurate positioning of the workpiece.

The modular device of the invention is susceptible to a number of changes and variants, within the inventive concept disclosed in the appended claims.

### Industrial Applicability

The present invention may find application in industry because it can be produced on an industrial scale in factories operating in the field of workpiece locking devices.

## Claims

1. A modular device (1) for clamping and/or supporting a workpiece (P) on a base plate (B) of a machine tool, the device comprising
- a main body (2) with a central cavity (3) defining a longitudinal axis (L) and having a first longitudinal end portion (4) and a second longitudinal end portion (5), said second end portion (5) having an external thread (7);
- first fixing means (11) comprising a pin (12) adapted to be introduced into said first end portion (4) of said body (2) and to be secured to the workpiece (P);
- a ring nut (28) mounted outside said main body (2) and having an internal thread (30) which is screwed onto said external thread (7) of said second end portion (5);
- a plurality of locking members (19) adapted to be introduced into corresponding angularly offset seats (18) of said main body (2) and each having an outer end (20) adapted to cooperate with the inner surface (31) of said ring nut (28) for receiving a radial thrust therefrom;
wherein said pin (12) comprises, proximate to one of its longitudinal ends (26), an annular recess (27) designed to cooperate with the locking members (19);
**characterized by** comprising second fixing means (13) which are adapted to be introduced into said second end portion (5) and to be secured to the base plate (B), said annular recess (27) having a first conical contact surface (34), said locking members (19) having an inner end (21) with a first portion (35) having a concave shape complementary to that of said first conical contact surface (34) to exert a uniform clamping force thereon, with an axial component.

2. Device as claimed in claim 1, **characterized in that** said locking members (19) are prismatic jaws, which are slidingly introduced with a precision running fit into said complementarily shaped seats (18) defining substantially radial sliding guides.

3. Device as claimed in claim 2, **characterized in that**, each of said prismatic jaws has an undercut (38) at one of its flat faces (36, 37), which defines a tooth (39) adapted to interact with a corresponding raised portion (40) in a facing surface (36) of each seat (18) to prevent the corresponding locking member (19) from falling into the central cavity (3) of said main body (2).

4. Device as claimed in claim 1, **characterized in that** said annular recess (27) of said pin (12) has a conical second contact surface (41) whose taper is directed opposite to that of said first contact surface area (34).

5. Device as claimed in claim 4, **characterized in that** said inner end (21) of said locking members (19) has a second portion (43) having a conical shape complementary to that of said second conical contact surface (41) of said annular recess (27).

6. Device as claimed in claim 1, **characterized in that** said inner surface of said ring nut (28) has a flared surface (31) with a predetermined inclination, at an intermediate portion, said outer end (20) of said locking members (19) having a convex contact zone (33) with a taper corresponding to that of said flared surface (31).

7. Device as claimed in claim 1, **characterized in that** it comprises respective annular recesses (44, 45) on the outer surface of said main body (2) and on the inner surface of said ring nut (28) for receiving respective sealing gaskets (46, 47) to prevent ingress of foreign matter and oppose undesired mutual loosening of said ring nut (28) and said main body (2).

8. Device as claimed in claim 1, **characterized in that** said first fixing means (11) and second fixing means (13) comprise a first screw interface member (11') and a second screw interface member (13') of commercial type.

9. Device as claimed in claim 8, **characterized in that** said at least one second screw interface member (13') has an enlarged head.

10. Device as claimed in claim 9, **characterized in that** said second longitudinal end portion (5) has an inward radially-directed annular collar (15) defining a first abutment surface (16) for the cylindrical head (13") of said second screw interface member (13').

11. Device as claimed in claim 10, **characterized in that** it comprises a centering bush (14) located below said main body (2) at said second longitudinal end portion (5), said annular collar (15) defining a second abutment surface (17) for said centering bush (14).

12. Device as claimed in claim 1, **characterized in that** said first (4) and said second (5) longitudinal end portions of said main body (2) comprise respective flat end surfaces (9, 10) perpendicular to said longitudinal axis (L) and designed to contact the workpiece (P) and the base plate (B) respectively.

13. Device as claimed in claim 1, **characterized in that** said main body (2), said locking members (19), said ring nut (28) and said pin (12) are made of stainless steel or other corrosion-resistant material of appropriate mechanical strength with suitable thermal treatments designed to impart adequate surface hardness thereto.

## Patentansprüche

1. Modulare Vorrichtung (1) zum Spannen und/oder Stützen eines Werkstücks (P) auf einer Grundplatte (B) einer Werkzeugmaschine, wobei die Vorrichtung umfasst:
- einen Hauptkörper (2) mit einem zentralen Hohlraum (3), der eine Längsachse (L) definiert und einen ersten Längsendabschnitt (4) und einen zweiten Längsendabschnitt (5) aufweist, wobei der zweite Endabschnitt (5) ein Außengewinde (7) aufweist;
- erste Befestigungsmittel (11), die einen Stift (12) umfassen, der geeignet ist, in den ersten Endabschnitt (4) des Hauptkörpers (2) eingeführt und an dem Werkstück (P) befestigt zu werden;
- eine Ringmutter (28), die außerhalb des Hauptkörpers (2) montiert ist und ein Innengewinde (30) aufweist, das auf das Außengewinde (7) des zweiten Endabschnitts (5) geschraubt ist;
- eine Vielzahl von Verriegelungselementen (19), die geeignet sind, in entsprechende winklig versetzte Sitze (18) des Hauptkörpers (2) eingeführt zu werden, und die jeweils ein äußeres Ende (20) aufweisen, das geeignet ist, mit der Innenfläche (31) der Ringmutter (28) zum Aufnehmen eines radialen Drucks davon zusammenzuwirken;
wobei der Stift (12) in der Nähe eines seiner Längsenden (26) eine ringförmige Aussparung (27) umfasst, die dazu bestimmt ist, mit den Verriegelungselementen (19) zusammenzuwirken;
**dadurch gekennzeichnet, dass** sie zweite Befestigungsmittel (13) umfasst, die geeignet sind, in den zweiten Endabschnitt (5) eingeführt und an der Grundplatte (B) befestigt zu werden, wobei die ringförmige Aussparung (27) eine erste konische Kontaktfläche (34) aufweist, wobei die Verriegelungselemente (19) ein inneres Ende (21) mit einem ersten Abschnitt (35) haben, der eine konkave Form hat, die komplementär zu derjenigen der ersten konischen Kontaktfläche (34) ist, um darauf eine gleichmäßige Klemmkraft mit einer axialen Komponente auszuüben.

2. Vorrichtung nach Anspruch 1, **dadurch gekennzeichnet, dass** die Verriegelungselemente (19) prismatische Backen sind, die gleitend mit einer Präzisionslaufpassung in die komplementär geformten Sitze (18) eingeführt werden, die im Wesentlichen radiale Gleitführungen definieren.

3. Vorrichtung nach Anspruch 2, **dadurch gekennzeichnet, dass** jede der prismatischen Backen eine Hinterschneidung (38) an einer ihrer flachen Flächen (36, 37) aufweist, die einen Zahn (39) definiert, der geeignet ist, mit einem entsprechenden erhöhten Abschnitt (40) in einer gegenüberliegenden Oberfläche (36) jedes Sitzes (18) zusammenzuwirken, um zu verhindern, dass das entsprechende Verriegelungselement (19) in den zentralen Hohlraum (3) des Hauptkörpers (2) fällt.

4. Vorrichtung nach Anspruch 1, **dadurch gekennzeichnet, dass** die ringförmige Aussparung (27) des Stifts (12) eine konische zweite Kontaktfläche (41) aufweist, deren Verjüngung entgegengesetzt zu der des ersten Kontaktflächenbereichs (34) gerichtet ist.

5. Vorrichtung nach Anspruch 4, **dadurch gekennzeichnet, dass** das innere Ende (21) der Verriegelungselemente (19) einen zweiten Abschnitt (43) mit einer konischen Form hat, die komplementär zu der der zweiten konischen Kontaktfläche (41) der ringförmigen Aussparung (27) ist.

6. Vorrichtung nach Anspruch 1, **dadurch gekennzeichnet, dass** die Innenfläche der Ringmutter (28) eine aufgeweitete Fläche (31) mit einer vorbestimmten Neigung an einem Zwischenabschnitt aufweist, wobei das äußere Ende (20) der Verriegelungselemente (19) eine konvexe Kontaktzone (33) mit einer Verjüngung aufweist, die derjenigen der aufgeweiteten Fläche (31) entspricht.

7. Vorrichtung nach Anspruch 1, **dadurch gekennzeichnet, dass** sie jeweilige ringförmige Aussparungen (44, 45) auf der Außenfläche des Hauptkörpers (2) und auf der Innenfläche der Ringmutter (28) zum Aufnehmen jeweiliger Dichtungen (46, 47) umfasst, um das Eindringen von Fremdkörpern zu verhindern und einem unerwünschten gegenseitigen Lösen der Ringmutter (28) und des Hauptkörpers (2) entgegenzuwirken.

8. Vorrichtung nach Anspruch 1, **dadurch gekennzeichnet, dass** das erste Befestigungsmittel (11) und das zweite Befestigungsmittel (13) ein erstes Schraubenschnittstellenelement (11') und ein zweites Schraubenschnittstellenelement (13') handelsüblicher Art umfassen.

9. Vorrichtung nach Anspruch 8, **dadurch gekennzeichnet, dass** das mindestens eine zweite Schraubenschnittstellenelement (13') einen vergrößerten Kopf hat.

10. Vorrichtung nach Anspruch 9, **dadurch gekennzeichnet, dass** der zweite Längsendabschnitt (5) einen radial nach innen gerichteten ringförmigen Kreis (15) aufweist, der eine erste Anlagefläche (16) für den zylindrischen Kopf (13") der zweiten Schraubenschnittstellenelement (13') definiert.

11. Vorrichtung nach Anspruch 10, **dadurch gekennzeichnet, dass** sie eine Zentrierbuchse (14) umfasst, die unterhalb des Hauptkörpers (2) an dem zweiten Längsendabschnitt (5) angeordnet ist, wobei der ringförmige Kreis (15) eine zweite Anlagefläche (17) für die Zentrierbuchse (14) definiert.

12. Vorrichtung nach Anspruch 1, **dadurch gekennzeichnet, dass** der erste (4) und der zweite (5) Endabschnitt in Längsrichtung des Hauptkörpers (2) jeweilige flache Endflächen (9, 10) senkrecht zu der Längsachse (L) aufweisen, die so ausgelegt sind, dass sie das Werkstück (P) bzw. die Grundplatte (B) berühren.

13. Vorrichtung nach Anspruch 1, **dadurch gekennzeichnet, dass** der Hauptkörper (2), die Verriegelungselemente (19), die Ringmutter (28) und der Stift (12) aus rostfreiem Stahl oder einem anderen korrosionsbeständigen Material mit geeigneter Mechanik Festigkeit hergestellt sind, wobei das Material mit geeigneten thermischen Behandlungen behandelt ist, die dafür ausgelegt sind, ihm eine angemessene Oberflächenhärte zu verleihen.

## Revendications

1. Dispositif modulaire (1) pour serrer et/ou supporter une pièce (P) sur une plaque de base (B) d'une machine-outil, le dispositif comprenant:
- un corps principal (2) avec une cavité centrale (3) définissant un axe longitudinal (L) et ayant une première partie d'extrémité longitudinale (4) et une seconde partie d'extrémité longitudinale (5), ladite seconde partie d'extrémité (5) ayant une partie externe filetée (7);
- des premiers moyens de fixation (11) comprenant une goupille (12) apte à être introduite dans ladite première portion d'extrémité (4) dudit corps (2) et à être solidarisée à la pièce (P);
- un écrou annulaire (28) monté à l'extérieur dudit corps principal (2) et ayant un filetage interne (30) qui est vissé sur ledit filetage externe (7) de ladite seconde portion d'extrémité (5);
- une pluralité d'éléments de verrouillage (19) aptes à être introduits dans des sièges décalés angulairement correspondants (18) dudit corps principal (2) et ayant chacun une extrémité externe (20) adaptée pour coopérer avec la surface interne (31) dudit écrou (28) pour recevoir une poussée radiale de celui-ci;
dans lequel ladite goupille (12) comprend, à proximité de l'une de ses extrémités longitudinales (26), un évidement annulaire (27) destiné à coopérer avec les organes de verrouillage (19);
**caractérisé en ce qu'**il comprend des deuxièmes moyens de fixation (13) qui sont adaptés pour être introduits dans ladite deuxième portion d'extrémité (5) et pour être fixés à la plaque de base (B), ledit évidement annulaire (27) ayant une première surface de contact conique (34), lesdits éléments de verrouillage (19) ayant une extrémité interne (21) avec une première partie (35) ayant une forme concave complémentaire de celle de ladite première surface de contact conique (34) pour exercer sur celle-ci une force de serrage uniforme, avec une composante axiale.

2. Dispositif selon la revendication 1, **caractérisé en ce que** lesdits éléments de verrouillage (19) sont des mâchoires prismatiques, qui sont introduites de manière coulissante avec un ajustement de précision dans lesdits sièges de forme complémentaire (18) définissant des guides coulissants sensiblement radiaux.

3. Dispositif selon la revendication 2, **caractérisé en ce que** chacune desdites mâchoires prismatiques présente une contre-dépouille (38) sur l'une de ses faces planes (36, 37), qui définit une dent (39) apte à coopérer avec un relief correspondant (40) dans une surface en vis-à-vis (36) de chaque siège (18) pour empêcher l'élément de verrouillage correspondant (19) de tomber dans la cavité centrale (3) dudit corps principal (2).

4. Dispositif selon la revendication 1, **caractérisé en ce que** ledit évidement annulaire (27) de ladite broche (12) a une seconde surface de contact conique (41) dont la conicité est dirigée à l'opposé de celle de ladite première surface de contact (34).

5. Dispositif selon la revendication 4, **caractérisé en ce que** ladite extrémité intérieure (21) desdits éléments de verrouillage (19) a une deuxième partie (43) ayant une forme conique complémentaire de celle de ladite deuxième surface de contact conique (41) dudit évidement annulaire (27).

6. Dispositif selon la revendication 1, **caractérisé en ce que** ladite surface intérieure dudit écrou annulaire (28) présente une surface évasée (31) avec une inclinaison prédéterminée, au niveau d'une partie intermédiaire, de ladite extrémité extérieure (20) desdits organes de verrouillage (19) ayant une zone de contact convexe (33) avec une conicité correspondant à celle de ladite surface évasée (31).

7. Dispositif selon la revendication 1, **caractérisé en ce qu'**il comprend des évidements annulaires respectifs (44, 45) sur la surface externe dudit corps principal (2) et sur la surface interne dudit écrou annulaire (28) pour recevoir des joints d'étanchéité respectifs (46, 47) pour empêcher l'entrée de corps étrangers et s'opposer au desserrage mutuel indésirable dudit écrou annulaire (28) et dudit corps principal (2).

8. Dispositif selon la revendication 1, **caractérisé en ce que** lesdits premiers moyens de fixation (11) et deuxièmes moyens de fixation (13) comprennent un premier organe d'interface à vis (10') et un deuxième organe d'interface à vis (13') de type commercial.

9. Dispositif selon la revendication 8, **caractérisé en ce que** ledit au moins un deuxième élément d'interface à vis (13') a une tête élargie.

10. Dispositif selon la revendication 9, **caractérisé en ce que** ladite deuxième portion d'extrémité longitudinale (5) a un collier annulaire dirigé radialement vers l'intérieur (15) définissant une première surface de butée (16) pour la tête cylindrique (13") dudit deuxième élément d'interface à vis (13').

11. Dispositif selon la revendication 10, **caractérisé en ce qu'**il comprend une douille de centrage (14) située en dessous dudit corps principal (2) au niveau de ladite seconde partie d'extrémité longitudinale (5), ledit collier annulaire (15) définissant une seconde surface de butée (17) pour ladite douille de centrage (14).

12. Dispositif selon la revendication 1, **caractérisé en ce que** lesdites première (4) et ladite deuxième (5) parties d'extrémité longitudinale dudit corps principal (2) comprennent des surfaces d'extrémité plates respectives (9, 10) perpendiculaires audit axe longitudinal (L) et conçu pour entrer en contact avec la pièce (P) et la plaque de base (B) respectivement.

13. Dispositif selon la revendication 1, **caractérisé en ce que** ledit corps principal (2), lesdits éléments de verrouillage (19), ledit écrou annulaire (28) et ladite goupille (12) sont réalisés en acier inoxydable ou en un autre matériau résistant à la corrosion de résistance mécanique appropriée avec des traitements thermiques appropriés conçus pour lui conférer une dureté de surface adéquate.
